(19) Europäisches Patentamt
European Patent Office
Office européen des brevets

(11) **EP 4 045 904 B1**

## (12) FASCICULE DE BREVET EUROPEEN

(45) Date de publication et mention
de la délivrance du brevet:
**03.06.2026 Bulletin 2026/23**

(21) Numéro de dépôt: **20780736.3**

(22) Date de dépôt: **01.10.2020**

(51) Classification Internationale des Brevets (IPC):
**G01N 29/09** $^{(2006.01)}$    **G01N 29/06** $^{(2006.01)}$
**G01N 29/265** $^{(2006.01)}$   **G01N 29/44** $^{(2006.01)}$
**G01N 29/46** $^{(2006.01)}$    **G01N 29/52** $^{(2006.01)}$
**B08B 9/027** $^{(2006.01)}$    **G01S 15/89** $^{(2006.01)}$
**G01N 29/04** $^{(2006.01)}$

(52) Classification Coopérative des Brevets (CPC):
**G01N 29/043; G01N 29/0645; G01N 29/0672;**
**G01N 29/09; G01N 29/265; G01N 29/4436;**
**G01N 29/4463; G01N 29/4472; G01N 29/46;**
**G01N 29/52;** G01N 2291/102; G01N 2291/105;
G01N 2291/106; G01N 2291/2634; G01S 15/8977

(86) Numéro de dépôt international:
**PCT/EP2020/077597**

(87) Numéro de publication internationale:
**WO 2021/073893 (22.04.2021 Gazette 2021/16)**

(54) **PROCEDE DE SURVEILLANCE DE L'INTERIEUR D'UN PIPELINE SOUS-MARIN**

VERFAHREN ZUR ÜBERWACHUNG DES INNEREN EINER UNTERWASSERROHRLEITUNG

METHOD FOR MONITORING THE INTERIOR OF A SUBMARINE PIPELINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.10.2019 FR 1911387**

(43) Date de publication de la demande:
**24.08.2022 Bulletin 2022/34**

(73) Titulaire: **IFP Energies nouvelles
92852 Rueil-Malmaison (FR)**

(72) Inventeur: **CLOCHARD, Vincent
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
US-A1- 2008 163 700    US-A1- 2013 298 937
US-A1- 2018 100 950

• SEBASTIAN WÖCKEL ET AL: "Acousto-capacitive tomography of liquid multiphase systems", SENSORS AND ACTUATORS A: PHYSICAL, vol. 172, no. 1, 23 July 2011 (2011-07-23), pages 322 - 329, XP028397456, ISSN: 0924-4247, [retrieved on 20110723], DOI: 10.1016/J.SNA.2011.04.010
• ALESSANDRO SIMI ET AL: "Hough transform based automatic pipe detection for array GPR: Algorithm development and on-site tests", RADAR CONFERENCE, 2008. RADAR '08. IEEE, IEEE, PISCATAWAY, NJ, USA, 26 May 2008 (2008-05-26), pages 1 - 6, XP031376111, ISBN: 978-1-4244-1538-0

• **LI HAIFENG ET AL: "Robotic Subsurface Pipeline Mapping with a Ground-penetrating Radar and a Camera", 2018 IEEE/RSJ INTERNATIONAL CONFERENCE ON INTELLIGENT ROBOTS AND SYSTEMS (IROS), IEEE, 1 October 2018 (2018-10-01), pages 3145 - 3150, XP033491291, DOI: 10.1109/IROS.2018.8594006**

**EP 4 045 904 B1**

## Description

La présente invention concerne un procédé de surveillance de l'intérieur d'un pipeline sous-marin. Par pipeline, on entend une canalisation destinée aux transports de fluides tels que des hydrocarbures.

ETAT DE L'ART

Dans les pipelines de transport d'hydrocarbures, des bouchons peuvent se former pour diverses raisons et bloquer la production. On peut les détruire par chauffage local, mais cela nécessite d'abord de pouvoir les localiser avec un minimum de précision (à quelques mètres près, alors que les pipelines peuvent faire plusieurs kilomètres).

On connait à ce titre un certain nombre de techniques, mais celles-ci se heurtent à des limitations en termes de contraintes d'acquisition.

En effet, des techniques comme la réflectométrie acoustique (basée sur le principe que la propagation d'une onde acoustique dans un milieu fluide est très sensible à chaque discontinuité dans les propriétés du fluide, voir Wang et al, 2011) ou l'utilisation des ondes guidées (Kippersund et al., 2011; Chapuis et al., 2014; Pomié et al., 2014) nécessitent l'accès à l'intérieur du tuyau, ce qui est complexe en particulier pour des pipelines positionnés en eaux profondes et/ou au moins partiellement enterrés.

Alternativement, les méthodes ultrasoniques telles que décrites dans les demandes de brevet FR3001162, WO2014/114887, WO2013/169984 et WO2011/133046 utilisent des dispositifs plaqués sur la canalisation (émetteurs et capteurs tout autour du pipeline). Il n'est plus nécessaire d'accéder à l'intérieur du pipeline, mais cela reste difficile de mise en œuvre en particulier avec des pipelines qui peuvent être enterrés, voir même être bétonnés.

Le pire cas est celui de pipelines sous-marins enterrés et en eaux profondes, pour lesquels il faut faire des excavations délicates et très couteuses.

De plus, les temps d'acquisition des méthodes connues sont très longs, jusqu'à une dizaine de minutes pour avoir une résolution suffisante dans une section transverse, ce qui n'est pas envisageable pour investiguer des dizaines voire des centaines de kilomètres de pipeline.

Il serait souhaitable de disposer d'une nouvelle solution universelle de détection de bouchons dans les pipelines sous-marins y compris enterrés, qui soit efficace, fiable, et peu couteuse en comparaison des méthodes existantes citées précédemment.

L'invention vient améliorer la situation.

Les documents suivants seront cités au cours de la description :

- Beylkin, G., 1984, The inversion problem and applications of the generalized Radon transform: Comm. Pure Appl. Math., 37, 579-599.
- Chapuis, B., Baronian, V., Jenson, F. and Pomié, L., 2014, Hydrate plug localization and characterization using guided waves. 11th European Conference on Non-Destructive Testing (ECNDT 2014), October 6-10, 2014, Prague, Czech Republic.
- Gerea, C., Nicoletis, L., and Granger, P.Y., 2000, "Multicomponent true amplitude anisotropic imaging",proceedings of the 9th IWSA workshop, SEG.
- Kippersund, R. A., Lunde, P., and Froysa, K. E., 2011. Hydrate Deposit Detection in Pipes Using Ultrasonic Guided Waves. In Proceedings of the 34th Scandinavian Symposium on Physical Acoustics.
- Lambaré, G., Virieux, J., Madariaga, R., Side, J., 1992, Iterative asymptotic inversion in the acoustic approximation. Geophysics, 57, 1138-1154.
- Miller, D., Oristaglio, M., and Beylkin, G., 1987, A new slant on seismic imaging: Migration and integral geometry: Geophysics, 52, 943-964.
- Nicoletis, L., Svay-Lucas, J., Clochard, V., and Compte, P., 1997, 3D true amplitude migration of 3-C compressional and converted shear wave: J. of Seismic Explo., 6, 127-142.
- Pomié, L., Tzotzi, C., Faderne, C., Chapuis, B., and Jenson, F., 2014. Hydrate Plug Localization and Characterization With Ultrasonic and Guided Waves Technologies. In 9th North American Conference on Multiphase Technology. BHR Group.
- Wang, X., Lewis, K.M., Papadopoulou, K.A., Lennox, B., and Turner, J.T., 2011, Detection of hydrate and other blockages in gas pipelines using acoustic reflectometry. Journal of Mechanical Engineering Science. 226(7) 1800-1810. DOI 10.1177/0954406211431029

En outre, on connait les documents suivants :

- US 2008/163700 A1, qui concerne un système de capteurs pour la surveillance de l'état de conduites et du débit d'un pipeline configuré pour l'écoulement de mélanges d'hydrocarbures ;

3

- US 2013/298937 A1, qui concerne un procédé basé sur des ultrasons à haute intensité pour remédier à l'obstruction d'une canalisation ;
- S. Wöckel, U. Hempel, J. Auge, "Acousto-capacitive tomography of liquid multiphase systems", SENSORS AND ACTUATORS A: PHYSICAL, vol. 172, no. 1, 23 juillet 2011 (2011-07-23), pages 322-329, XP028397456, ISSN: 0924-4247, https://doi.org/10.1016/j.proeng.2010.09.099, qui concerne un procédé de tomographie de données acoustiques et de capacités pour des systèmes liquides multi-phasiques dans un pipeline ;
- A. Simi, S. Bracciali, and G. Manacorda, "Hough transform based automatic pipe detection for array GPR: Algorithm development and on-site tests." 2008 IEEE Radar Conference (2008): 1-6, X P03 1376111, ISBN: 978-1-4244-1538-0, qui concerne l'utilisation de la transformée de Hough pour détecter de manière automatique des pipelines à partir de données géoradar ;
- US 2018/100950 A1, qui concerne un procédé exploitant un faisceau acoustique à sons multiples co-localisé, pour une évaluation de fuite de flux électromagnétique en fond de trou.

## PRESENTATION DE L'INVENTION

L'invention propose selon un premier aspect un procédé de surveillance de l'intérieur d'un pipeline disposé au contact d'un sol sous une masse d'eau, selon la revendication 1.

Selon d'autres caractéristiques avantageuses et non-limitatives :

Ledit dispositif d'acquisition acoustique comprend au moins une source d'ondes acoustiques et au moins un capteur d'ondes acoustiques, lesdites données acoustiques descriptives d'une coupe transversale dudit pipeline à ladite position étant un champ acoustique réfléchi reçu par l'au moins un capteur suite à la génération d'un champ acoustique par l'au moins une source.

Ledit dispositif d'acquisition acoustique comprend une pluralité de capteurs et/ou de sources disposés selon une direction sensiblement orthogonale à une direction longitudinale dudit pipeline à ladite position.

L'étape (b) comprend le calcul aux positions de chaque source et de chaque capteur de fonctions dites de Green représentatives d'une réponse à une émission acoustique ponctuelle en tout point de ladite coupe transversale, puis l'estimation en tout point de ladite coupe transversale dudit pipeline d'une valeur de perturbation relative d'impédance en fonction dudit champ acoustique reçu et de paramètres desdites fonctions de Green calculées.

Le calcul aux positions de chaque source et de chaque capteur desdites fonctions de Green comprend l'interpolation en fonction des positions réelles desdites sources et desdits capteurs de fonctions de Green précalculées pour un ensemble de positions fictives.

Ladite estimation par migration quantitative est obtenue en un point $x_0$ de la coupe transversale du pipeline, pour une collection de source(s) et capteur(s) s'ils sont coplanaires, grâce à la formule

$$[\text{math } 27] I(x_0) = \frac{4}{(2\pi)^2} \int_{E_{\Psi_s}} d\Psi_s \int_{|p|=0}^{p_{max}} |p| d|p| \hat{f}(p, \Psi_s) e^{-ix_0.p}$$

et sinon grâce à la formule

$$[\text{math } 28] I(x_0) = \frac{4}{(2\pi)^3} \int_{E_{\Phi_s}} d\Phi_s \int_{E_{\Psi_s}} sin\Psi_s d\Psi_s \int_{|p|=0}^{p_{max}} |p|^2 d|p| \hat{f}(p, \Psi_s, \Phi_s) e^{-ix_0.p}$$

avec $\Psi_s$ et $\Phi_s$ traduisant la couverture angulaire du dispositif d'acquisition sismique, $p$ le nombre d'onde de diffraction, et $\hat{f}$ la transformée de Fourier des perturbations du milieu.

Le procédé selon l'invention comprend en outre une étape (c) de comparaison dudit profil estimé de perturbations relatives d'impédance avec au moins un modèle de référence de perturbations relatives d'impédance représentatif de la présence d'un bouchon dans le pipeline à ladite position.

A l'étape (c) ledit profil estimé de perturbations relatives d'impédance est comparé avec une pluralité de modèles de référence de perturbations relatives d'impédance représentatifs d'un ensemble de configurations possibles de bouchon dans le pipeline à ladite position.

Ledit ensemble de configurations possibles de bouchon dans le pipeline à ladite position comprend au moins une configuration de bouchon total, une configuration de bouchon partiel en bas, et une configuration de bouchon partiel en couronne.

A l'étape (c) ledit profil estimé de perturbations relatives d'impédance est en outre comparé avec un modèle de référence de perturbations relatives d'impédance représentatif d'une absence de bouchon dans le pipeline à ladite position.

Le procédé comprend en outre une étape (d) de destruction du bouchon détecté.

Ledit pipeline est un pipeline d'hydrocarbures, ledit bouchon étant un bouchon d'hydrates.

Selon un deuxième aspect il est proposé un équipement pour la mise en œuvre du procédé de surveillance de l'intérieur d'un pipeline disposé au contact d'un sol sous une masse d'eau, selon la revendication 12.

Selon un troisième aspect est proposé un produit programme d'ordinateur téléchargeable depuis un réseau de communication et/ou enregistré sur un support lisible par ordinateur et/ou exécutable par un processeur, selon la revendication 13.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 représente une architecture de système pour la mise en œuvre du procédé selon l'invention ;
- La figure 2 représente schématiquement le procédé de détection d'un bouchon dans une pipeline selon un mode de réalisation préféré de l'invention ;
- La figure 3 décrit le lien entre des angles, c'est à dire les pendages investigués dans le milieu (couverture angulaire) en fonction d'un dispositif d'acquisition acoustique en 2D et en 3D ;
- La figure 4a représente trois exemples de modèles synthétiques (impédance acoustique) de bouchon pour trois configurations de bouchons ;
- La figure 4b représente trois exemples de modèles de perturbations relatives d'impédance correspondant aux trois exemples de modèles synthétiques de bouchon de la figure 4a ;
- La figure 4c représente trois exemples de profils de perturbations relatives d'impédance estimés par une mise en œuvre de la migration quantitative selon l'invention correspondant aux trois exemples de modèles de perturbations relatives d'impédance de la figure 4b ;
- La figure 5a représente deux exemples de modèles synthétiques de bouchon et de modèles correspondant de perturbations relatives d'impédance, respectivement pour une configuration de présence d'un bouchon total et une configuration d'absence de bouchon ;
- La figure 5b représente deux exemples profils de perturbations relatives d'impédance estimés par une mise en œuvre de la migration quantitative selon l'invention, correspondant aux deux exemples de modèles de perturbations relatives d'impédance de la figure 5a .

DESCRIPTION DETAILLEE

*Principe de l'invention*

Le présent procédé propose d'utiliser des données acoustiques par exemple de type sonar CHIRP (Compressed High Intensity Radar Pulse) pouvant être enregistrées par un système d'acquisition embarqué sur un bateau (eaux peu profondes) ou un véhicule sous-marin téléguidé de type ROV (Remotely Operated underwater Vehicle) pouvant parcourir des kilomètres à quelques dizaines de centimètres (50 cm au minimum) ou quelques mètres au-dessus d'un pipeline posé ou (semi-)enterré sous le fond de la mer.

Plus précisément, on connait l'utilisation de systèmes sonar comme « profileurs de fond de l'eau » (« subbottom profiler ») du fait de leur capacité à enregistrer l'énergie acoustique réfléchie par les couches de sédiments marins, dans les premiers mètres sous le fond de l'eau. Par exemple, le Sub-Bottom Imager™ (SBI) de la société Pangeo Subsea est capable de fournir une cartographie en temps réel de largeur quelques mètres et avec un pouvoir de pénétration de quelques mètres, voire quelques dizaines de mètres, dans les sédiments marins. La technique de traitement mise en œuvre utilise une technique de type « beamforming », permettant de focaliser les ondes acoustiques reçues par le sonar et ainsi de calculer une image dans les premiers mètres, jusqu'à une vingtaine de mètres, sous le fond de l'eau (en fonction du contenu fréquentiel des sources acoustiques).

Ces techniques connues sont uniquement dirigées vers l'exploration du sous-sol (au mieux elles permettent, lorsque couplées à un magnétomètre, de localiser un pipeline, voir le brevet US4422166) et sont incapables de caractériser l'intérieur d'un pipeline et a fortiori de détecter un bouchon dans un pipeline.

De manière particulièrement astucieuse, la demanderesse a montré, comme on le verra par la suite, qu'une utilisation sur des données acoustiques d'une technique de migration quantitative adaptée permet de retrouver des perturbations relatives d'impédances (on rappelle que l'impédance d'un milieu pour une onde acoustique correspond au produit de la densité du milieu par la vitesse de propagation de l'onde acoustique) grâce auxquelles on peut surveiller l'intérieur du pipeline et notamment détecter un bouchon. Ces perturbations sont en effet à la fois liées à la constitution du pipeline mais aussi à la présence de bouchons partiels ou totaux, d'où la possibilité de caractériser l'intérieur du pipeline selon un plan transversal.

Ainsi, il suffit d'acquérir des données acoustiques adéquates au moyen d'un dispositif « survolant » le pipeline (sur toute sa longueur si l'on souhaite être exhaustif) pour détecter tout bouchon. Cette technique est ainsi totalement non-invasive (aucun accès de près ou de loin au pipeline n'est nécessaire), fiable, et moins chère.

*Architecture*

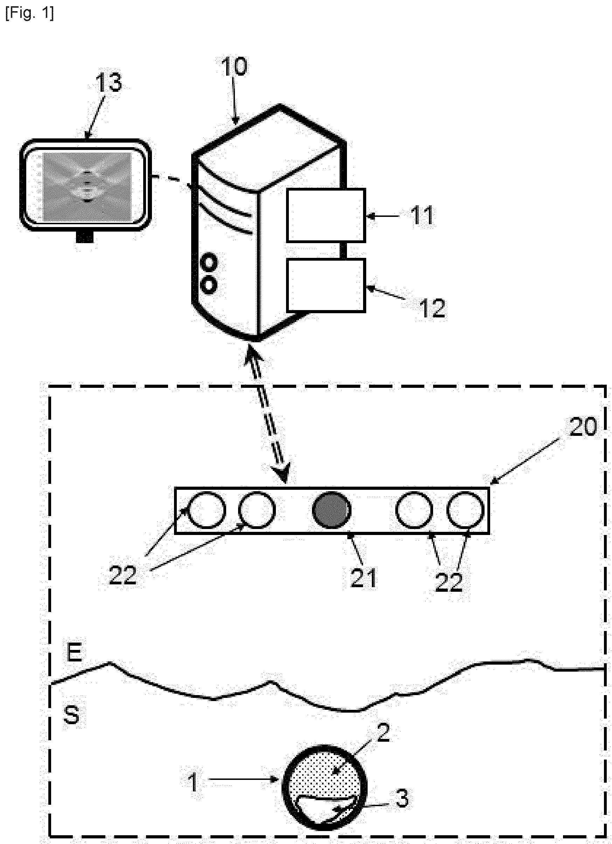

En référence à la **figure 1,** est proposé un procédé de surveillance de l'intérieur d'un pipeline 1 disposé au contact d'un sol S sous une masse d'eau E. Par « disposé au contact d'un sol », on entend qu'au moins une partie du pipeline 1 peut être posée à même le sol S et/ou être au moins partiellement enterrée sous le sol S.

Le présent procédé est typiquement mis en œuvre au moyen d'un équipement 10 tel que représenté par la figure 1 (par exemple un poste de travail informatique) équipé de moyens de traitement de données 11 (un processeur) et de moyens de stockage de données 12 (une mémoire, en particulier un disque dur), typiquement pourvu d'une interface d'entrée et de sortie 13 pour saisir des données et restituer les résultats du procédé.

Ledit pipeline 1 est typiquement une canalisation sensiblement circulaire, et forme une paroi (qui peut être constituée de métal et éventuellement recouverte d'un ou plusieurs types d'isolants, jusqu'à une quinzaine de centimètres d'épaisseur au total) séparant un « intérieur » d'un « extérieur ». L'intérieur est normalement vide (le pipeline est creux) et se destine le plus souvent au transport d'hydrocarbures sous une forme mixte gazeuse ou liquide ou solide, par exemple du gaz naturel. On appelle « lumière » 2 cet espace vide que le pipeline 1 présente normalement à l'intérieur. Comme expliqué, un bouchon 3 peut s'être formé à l'intérieur du pipeline 1.

Par bouchon 3, on entend une masse solide ou du moins sensiblement plus visqueuse que le fluide circulant normalement dans le pipeline 1, et réduisant (bouchon partiel) ou obstruant (bouchon total) la lumière 2, et donc limitant le débit de fluide dans le pipeline 1. Dans la suite de la présente description, on prendra deux exemples de bouchons 3 partiels soit « en bas » (i.e. la lumière 2 restante est en haut), soit « en couronne » (i.e. la lumière 2 restante est au centre), mais il est bien clair que la forme d'un bouchon selon l'invention peut être quelconque. Dans le cas d'hydrocarbures, le bouchon 3 qui peut se former est généralement un bouchon d'hydrate, et c'est cet exemple (hydrate de gaz) que l'on prendra également dans la suite de la description.

Le pipeline 1 est disposé au contact d'un sol S sous une masse d'eau E, ce qui signifie qu'il est un pipeline sous-marin (la masse d'eau S est généralement de plusieurs centaines, voire milliers, de mètres d'épaisseur), posé ou enterré au moins partiellement. Plus précisément, on appelle « fond de l'eau » l'interface entre le sol S solide (généralement constitué de sédiments) et la masse d'eau E qui le recouvre. Le pipeline 1 repose alors soit sur le fond de l'eau (il est donc entouré d'eau), soit le pipeline est enterré partiellement (sa partie supérieure est en contact de l'eau et sa partie inférieure est entourée du matériau du sol S), soit il est enterré totalement (il est alors sous le fond d'eau et n'est plus en contact avec l'eau).

Par « surveillance » de l'intérieur du pipeline 1, on entend au sens large toute obtention d'informations descriptives de l'intérieur du pipeline 1 en particulier toute caractéristique de la présence ou non d'un bouchon 3. Plus précisément, le résultat de ladite surveillance peut être une caractérisation de l'intérieur du pipeline 1 (valeur de différentes grandeurs physiques), une image de l'intérieur du pipeline 1, voire directement une information sur la présence ou non d'un bouchon 3 dans le pipeline 1 (un booléen, une classification de l'éventuel bouchon 3, etc.). En d'autres termes, le présent procédé peut être un procédé de caractérisation de l'intérieur du pipeline 1, un procédé d'imagerie de l'intérieur du pipeline 1 et/ou un procédé de détection d'un bouchon 3 dans le pipeline 1.

Dans le dernier cas, qui sera plus précisément décrit dans la suite de la présente description, on entend une tentative de détection d'au moins un bouchon. Plus précisément, le présent procédé peut être mis en œuvre en réponse à la détection d'un problème (chute de débit) mais également en préventif, ou au redémarrage d'exploitation du pipeline, ce qui signifie qu'il est possible que la conclusion à l'issue de la mise en œuvre du procédé soit qu'il n'y a aucun bouchon. Par ailleurs, comme on le verra par la suite, le présent procédé peut être mis en œuvre ponctuellement au niveau d'un tronçon ciblé du pipeline 1, ou bien sur une plus grande longueur, voire sur tout le pipeline 1. Comme la position d'un pipeline 1 est en effet généralement géo-référencée, le pipeline 1 peut être parcouru assez précisément dans toute sa longueur.

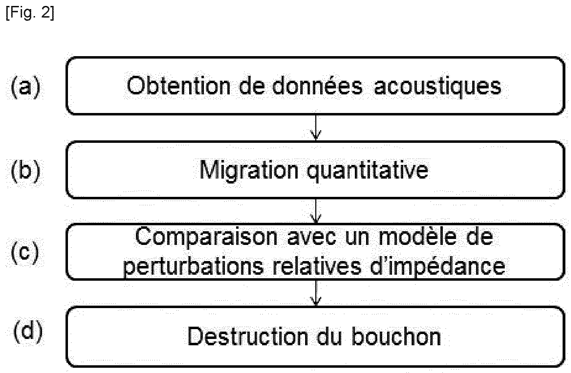

On va à présent expliquer comment le présent procédé est mis en œuvre pour une position le long du pipeline 1. Il suffira de le répéter pour un grand nombre de positions si l'on souhaite une surveillance étendue. La **figure 2** décrit un exemple de mise en œuvre du procédé selon l'invention.

*Obtention de données acoustiques*

Le procédé utilise comme expliqué des données dites acoustiques ou improprement « sismiques ».

En référence à la figure 2, dans une étape (a), de façon connue en sismique marine, les moyens de traitement de données 11 obtiennent pour une position le long dudit pipeline 1 des données acoustiques descriptives d'une coupe transversale dudit pipeline 1 à ladite position, acquises d'un dispositif d'acquisition acoustique 20 mobile dans ladite masse d'eau E.

Par "dispositif d'acquisition acoustique mobile dans la masse d'eau", on entend un dispositif d'acquisition acoustique apte à se déplacer d'une position le long du pipeline à une autre.

Ledit dispositif d'acquisition acoustique 20 mobile est comme expliqué typiquement un « sondeur de sédiments » tel qu'un bateau ou un ROV. Il comprend au moins une source 21 (par exemple, en sismique marine classique, un canon à eau, c'est-à-dire une chambre à explosion de mélange gazeux) et au moins un capteur 22 (appelé également « récepteur », typiquement un transducteur), ce qui signifie qu'il émet et enregistre des ondes acoustiques renvoyées. Préférentiellement, le dispositif d'acquisition 20 comprend une pluralité de sources 21 et/ou une pluralité de capteurs 22 (on parle alors d'une antenne de capteurs) disposés selon une direction sensiblement orthogonale à une direction longitudinale dudit pipeline 1. On comprendra que cette direction est obtenue par un bon positionnement du dispositif 20 complet dans l'eau E.

Le plus souvent, on a une source 21 unique localisée au milieu d'une antenne de capteurs 22 qui s'étend de part et d'autre (on prendra cet exemple dans la suite de la description). Celle-ci peut avoir une envergure de plusieurs mètres, voire des dizaines de mètres si par exemple on dispose plusieurs ROV cote à cote. Alternativement on peut avoir une pluralité de sources 21 pour un capteur 22, voire une pluralité de sources 21 et de capteurs 22, éventuellement disposés de manière complexe (non alignée, ce qui nécessitera une reconstruction 3D, voir plus loin). On peut par exemple envisager des sources 21 tous les mètres par exemple pour avoir une redondance de l'information pour améliorer le rapport signal sur bruit. Dans tous les cas, le dispositif d'acquisition 20 « survole » (c'est-à-dire qu'il se déplace au-dessus du pipeline, dans la masse d'eau) la trajectoire du pipeline à quelques mètres au-dessus (en particulier entre 0,5m et 10m).

Dans le présent cas, on comprend que le dispositif d'acquisition 20 émet et enregistre des ondes acoustiques dans une gamme de fréquence qui est compatible avec le diamètre du pipeline 1 à étudier, en particulier dans la gamme entre 600Hz et 20kHz. Par exemple pour un diamètre de 30cm du pipeline 1, il faut une bande de fréquence entre 3kHz et 15kHz. L'homme du métier saura choisir les fréquences adaptées. Il est bien clair que de telles gammes de fréquence sont très différentes de celles mises en œuvre en sismique marine classique (généralement inférieures à 200Hz), qui vise bien souvent à imager des objets situés à plusieurs kilomètres de profondeur sous le sol.

Les ondes acoustiques générées par une source 21 se convertissent en ondes élastiques au fond de la mer. L'ébranlement créé se propage dans le sol S par ondes progressives. Lorsque ces ondes arrivent à une surface de discontinuité séparant deux milieux de propriétés élastiques ou de densités différentes, une partie de l'énergie remonte en surface par des phénomènes complexes de réflexion, réfraction ou de conversion des ondes. Le champ d'onde montant est enregistré par les capteurs 22 en fonction du temps depuis l'émission par la source 21. A chaque couple (source 21, capteur 22) correspond un enregistrement temporel, dit « trace sismique », l'ensemble des enregistrements ainsi obtenus est appelé sismogramme. La forme d'une réflexion enregistrée sur le sismogramme (plus communément appelée événement) est étroitement liée à la surface de discontinuité géologique qui l'a générée, ainsi qu'au type d'onde qui a été enregistrée.

Le sismogramme (données réelles) contient donc l'arrivée directe de la source 21 au capteur 22 (sans réflexion), la réflexion des ondes acoustiques sur le fond de l'eau, et le champ d'onde diffracté par le pipeline 1, ou « champ acoustique » et éventuellement par d'autres hétérogénéités du milieu. Un sismogramme est généré pour chaque position du dispositif d'acquisition 20 qui avance le long de la trajectoire du pipeline 1 si l'on souhaite une détection étendue.

L'information intéressante pour la surveillance de l'intérieur du pipeline et plus particulièrement la détection des bouchons 3 concerne donc les réflexions/diffractions du pipeline 1 enregistrées dans le sismogramme, i.e. le champ acoustique. A partir du dispositif d'acquisition 20, du modèle de vitesse et du profil du fond de l'eau, on peut modéliser la première réflexion sur le fond de l'eau. Lorsque le pipeline 1 est enterré, les informations utiles arriveront donc juste après et pourront donc être isolées pour être imagées. Ce processus peut gagner en précision si on connait précisément la position du pipeline et son diamètre, car on peut ainsi modéliser directement les diffractions sur le haut et la base du tuyau, et les diffractions utiles concernant un éventuel bouchon 3 seront donc localisées entre. Ce processus peut bénéficier aussi de techniques de traitements sismiques déjà connues et couramment utilisées en sismique marine classique, comme la déconvolution par le signal source.

A noter que dans certaines configurations du fond marin (coulées de boues, effondrements), le pipeline 1 peut bouger latéralement/verticalement, et après une identification automatique des hyperboles de diffraction sur le tuyau, on peut alors estimer ces déplacements pour recalculer la position du pipeline.

*Migration quantitative*

En exploration pétrolière, l'objectif principal de l'imagerie est de passer d'un volume en temps (le sismogramme), à un volume en profondeur qui serait équivalent à une coupe géologique verticale. Ce passage est appelé migration. Ce problème est d'autant plus difficile que les milieux géologiques sont complexes. La migration, pour le cas acoustique, se formule comme un opérateur pseudo-inverse de l'opérateur de modélisation.

Il a été établi par Beylkin, avec dans le cas acoustique, une théorie de la migration avec préservation d'amplitude (Beylkin, 1984) qui reconstruit les perturbations du paramètre physique (compressibilité). L'application géophysique de cette théorie est mise en valeur dans (Miller et al, 1987). Les travaux théoriques de Beylkin ont ensuite été généralisés au cas élastique. Par cette contribution fondamentale, les auteurs exploitent la redondance des données pour décorréler les trois paramètres physiques du problème élastique (impédance P, impédance S et la densité). Ces formulations théoriques sont donc adaptées à des dispositifs d'acquisition dit de « sismique de surface en couverture multiple » car ils sont constitués de nombreuses sources et capteurs répartis régulièrement sur une grande surface et fournissant des enregistrements sismiques possédant des informations redondantes. Un même réflecteur sismique dans le sous-sol va être vu par des ondes sismiques qui se propagent de manières différentes, autrement dit les rais qui sont perpendiculaires aux fronts d'ondes arrivent sur le réflecteur sismique avec des angles d'incidence différents.

Ainsi, le présent procédé comprend une étape (b) d'estimation par migration quantitative à partir desdites données acoustiques d'un profil estimé de perturbations relatives d'impédance selon ladite coupe transversale dudit pipeline 1. Ledit profil prend généralement la forme d'une image 2D de la coupe transversale (i.e. l'étape (b) voit l'estimation pour chaque point de la coupe - ou plutôt d'un domaine prédéfini autour du pipeline 1 - d'une valeur de perturbation relative d'impédance ; on peut aussi parler de reconstruction 2D).

Par migration quantitative, dite GRT pour "Generalized Radon Transform", on entend une migration reposant justement sur la transformée de Radon généralisée inverse.

Pour un événement enregistré au temps t pour un couple (source 21, capteur 22), le principe consiste à répartir l'amplitude de cet événement suivant une isochrone caractérisée par : $t = ts + tr$ où $ts$ représente le temps de trajet mis par l'onde pour aller de la source à un point à imager $x_0$ et $tr$ le temps mis par l'onde pour aller du même point au capteur. Les isochrones sont construites dans le domaine profondeur et l'image migrée, obtenue par sommation de toutes les isochrones, sera une image en profondeur (i.e. selon ladite coupe). Les réflecteurs reconstruits sont alors constitués par l'enveloppe des isochrones. Localement, la courbe isochrone peut être assimilée à un segment de droite. Lorsque tout le dispositif 20 est pris en compte, nous avons une analogie entre la reconstruction du sous-sol par la sommation pondérée de courbes isochrones (migration quantitative) et la transformée de Radon inverse en un point du sous-sol ($x_0$). Ce principe de sommation est valable quelle que soit la position des sources 21 et des capteurs 22. Il est donc généralisable à n'importe quelle architecture de dispositifs d'acquisition 20.

La migration quantitative GRT repose sur l'utilisation des fonctions dites de Green (réponse du milieu à une émission ponctuelle, c'est-à-dire à une distribution de Dirac). Il est alors possible de les calculer dans des modèles hétérogènes isotropes, à des coûts raisonnables même en 3D. Par fonctions de green destinées à la migration quantitative, on entend un ensemble de quantités déterminées pour chaque point $x_0$ du sous-sol et chaque source/chaque capteur, comprenant :

- le temps de trajet d'une onde acoustique allant du point x0 à la source/au capteur ;
- une valeur de divergence géométrique qui correspond à une correction d'amplitude fonction de la distance parcourue par l'onde acoustique entre la source/le capteur et le point à imager $x_0$;
- l'angle de polarisation de l'onde acoustique ayant parcouru le trajet depuis la source/le capteur jusqu'au point à imager $x_0$.

Les fonctions de Green sont généralement données sous la forme de cartes (ou encore de cubes) de temps de trajet, de cartes (ou encore de cubes) de divergences sphériques, et de cartes (ou encore de cubes) d'angles de polarisation. Les fonctions de Green peuvent être calculées par tracé de rais 2D ou 3D (cf. par exemple [Lambaré et al., 1992]) en fonction du milieu de propagation, et avantageusement de manière analytique lorsque le milieu est tabulaire (cf. par exemple [Gerea et al, 2000]). Ces quantités sont utilisées comme pondérations dans la migration quantitative. La reconstruction ainsi que la quantification des paramètres physiques du milieu est obtenue par sommation de courbes de diffractions pondérées. La pondération a été définie à partir de la transformée de Radon généralisée inverse, dépendant du point à imager. Un des points clef de la migration quantitative est le calcul du Jacobien, dit de Beylkin, qui consiste à transformer les sommations sur les positions sources (ou capteurs, suivant le type de dispositif) en sommation sur les pendages reconstruits du milieu. La migration quantitative GRT vise donc à restituer la position des réflecteurs, mais aussi leur amplitude. Elle est en cela plus précise qu'une migration classique non quantitative. Notamment, on peut de cette façon comparer les perturbations relatives d'impédances obtenues par migration quantitative avec des perturbations relatives d'impédances de référence, afin d'en déduire de façon plus fiable la présence ou non d'un bouchon, sa géométrie, voire sa nature.

Dans le présent cas, si on considère un dispositif d'acquisition pour suivre des pipelines 1 enterrés en eaux profondes, qui peut par exemple être embarqué dans un ROV, il est possible de se heurter au problème d'une couverture potentiellement limitée du dispositif d'acquisition 20 et au manque de redondance de l'information des données acoustiques, surtout s'il ne fait qu'un seul passage au-dessus du pipeline 1. Dans Nicoletis et al (1997), les auteurs ont développé une représentation mono-paramètre du sous-sol : perturbation nulle en densité et coefficient de Poisson, ou encore perturbations relatives d'impédance P égales à celles des ondes S et perturbations relatives en densité nulles.

Comme l'on démontrera plus loin, l'expression de la formule d'imagerie en 2D pour l'estimation des perturbations relatives d'impédance (cas d'une collection, c'est-à-dire un ensemble, de sources 21 et capteurs 22 disposés coplanairement) en un point $x_0$ de la coupe transversale selon un mode préféré de mise en œuvre de l'invention peut être :

$$[\text{math 1}]I(x_0) = \frac{4}{(2\pi)^2} \int_{E_{\Psi_s}} d\Psi_s \int_{|p|=0}^{p_{max}} |p|d|p|\hat{f}(p, \Psi_s)e^{-ix_0.p}$$

Le vecteur $p$ est encore appelé nombre d'onde de diffraction, l'angle $\Psi_s$ traduit la couverture angulaire du dispositif d'acquisition sismique 20, $\hat{f}(p, \Psi_s)$ la transformée de Fourier des perturbations du milieu. L'expression $I(x_0)$ obtenue est proche de la transformée de Fourier inverse 2D en coordonnées polaires.

Similairement, l'expression de la formule d'imagerie cette fois en 3D (cas des sources 21 et capteurs 22 disposés de manière quelconque) au point $x_0$ selon un mode préféré de mise en œuvre de l'invention peut être :

$$[\text{math 2}]I(x_0) = \frac{4}{(2\pi)^3} \int_{E_{\Phi_s}} d\Phi_s \int_{E_{\Psi_s}} sin\Psi_s d\Psi_s \int_{|p|=0}^{p_{max}} |p|^2 d|p|\hat{f}(p, \Psi_s, \Phi_s)e^{-ix_0.p}$$

Les 2 angles d'Euler $\Psi_s$ et $\Phi_s$ traduisent la couverture la couverture angulaire du dispositif d'acquisition sismique 20 (cette fois sur deux coordonnées du fait du caractère non coplanaire). L'expression $I(x_0)$ obtenue est proche de la transformée de Fourier inverse 3D en coordonnées sphériques.

En pratique, on obtient une image quantifiée du sous-sol pour chaque collection à source 21/capteur 22 commun. L'image quantifiée du sous-sol pour le dispositif 20 complet est obtenue par simple sommation des images obtenues pour les différentes collections.

*Fonctions de Green*

Comme expliqué, une fois que le champ d'onde diffracté par le pipeline 1 (i.e. le champ acoustique) est isolé/identifié on peut appliquer l'imagerie quantitative. Celle-ci repose sur le calcul des fonctions de Green en chaque position (source, capteur). En d'autres termes, l'étape (b) comprend en particulier le calcul aux positions de chaque source 21 et chaque capteur 22 de fonctions dites de Green représentatives d'une réponse du milieu à une émission acoustique ponctuelle, puis l'estimation en tout point de ladite coupe transversale dudit pipeline 1 d'une valeur de perturbation relative d'impédance en fonction dudit champ acoustique reçu et de paramètres desdites fonctions de Green calculées.

Connaissant le modèle de vitesse, les fonctions de Green peuvent être très avantageusement pré-calculées pour certaines positions de sources et capteurs, et éventuellement ré-interpolées dans le souci de gagner du temps calcul, surtout dans le cas d'une imagerie 3D.

A ce titre, le calcul aux positions de chaque source 21 et chaque capteur 22 des fonctions de Green peut comprendre l'interpolation en fonction des positions réelles des sources 21 et des capteurs 22 de fonctions de Green précalculées pour un ensemble de positions fictives.

L'idée est de définir un dispositif d'acquisition fictif dont les sources et capteurs seraient répartis de façon connue, en particulier régulièrement répartis, de sorte à pouvoir facilement exprimer les positions réelles par rapport à ces positions fictives. Par exemple, lesdites positions fictives peuvent être choisies aux sommets d'une structure géométrique régulière, par exemple une grille à motif carré. A noter qu'on n'est pas limité à une disposition régulière et qu'on pourra prendre n'importe quelles positions fictives (par exemple en les répartissant statistiquement par rapport à un ensemble de dispositifs 20 connus), il suffit que ces positions fictives soient suffisamment nombreuses et suffisamment réparties pour qu'on puisse exprimer les positions réelles en fonction des positions fictives.

Chaque position réelle de source 21/capteur 22 peut donc être associée à un groupe de positions fictives de source 21/capteur 22 (typiquement le groupe de sommets voisins). Le pré-calcul des fonctions des Green consiste à les calculer en chaque position fictive de source et de capteur, le cas échéant bien en amont du procédé et en particulier avant le calcul de la migration quantitative de l'étape (b), cela permet donc de gagner du temps calcul et cela peut être déterminant pour parvenir à un traitement en temps réel.

L'interpolation consiste à définir un coefficient d'interpolation qui sera associé à chaque position fictive dans un groupe. Par exemple si on a 4 positions fictives au sommet d'un carré, ce poids sera de ¼ pour chacun. Plus précisément comme une fonction de Green est caractérisée par des cartes/cubes de paramètres (temps de trajet, divergence géométrique, angles de polarisation), l'interpolation des fonctions de Green consiste donc à faire une interpolation de ces cartes/cubes. Comme le modèle de vitesse est suffisamment lisse, on peut considérer une interpolation linéaire.

A noter que si on ne veut pas faire d'interpolation (par exemple en 2D), il suffit d'associer une position réelle avec une position fictive et un coefficient d'interpolation égale à 1.

*Réalisation du calcul de migration quantitative*

On suppose connu le modèle de vitesse des ondes acoustiques dans la masse d'eau E (salée ou pas) et dans les premiers mètres du sol S (souvent ayant les caractéristiques de la boue et/ou de sédiments peu consolidés) au niveau de la zone d'intérêt englobant le pipeline 1 à surveiller.

La migration quantitative s'apparente à la sommation pondérée de courbes isochrones qui sont associées à chaque amplitude d'une trace sismique et donc à un couple (source 21, capteur 22). Par exemple, si le modèle de vitesse est homogène, une courbe isochrone est une portion d'ellipse dont les foyers correspondent à la position de la source 21 et du capteur 22.

La formulation générale du problème d'imagerie proposé par Beylkin est donnée par la relation suivante :

$$[\text{math 3}] I(x_0) = \sum_{\sigma(s),\sigma(r)} \sum_{\omega=-\omega_{max}}^{+\omega_{max}} (B_b)^*(s,x_0,r,\omega) Q(s,x_0,r,\omega) \delta U_b^{obs}(s,r,\omega)$$

Comme expliqué avant, $x_0$ est un point du domaine (c'est-à-dire un point du milieu) que l'on veut imager et la quantité $I(x_0)$ représente le résultat de l'image quantifiée du sous-sol au point $x_0$ en l'espèce la valeur de perturbation relatives d'impédance en ce point, l'ensemble constituant ledit profil.

La sommation sur les fréquences est limitée par la borne supérieure du spectre fréquentiel des données observées ($\omega_{max}$).

La sommation spatiale sur les variables paramétriques $\sigma(s)$ et/ou $\sigma(r)$ dépend des dispositifs d'acquisition sismiques et de la dimension de l'acquisition sismique (ligne, courbe, surface).

$(B_b)^*$ est l'adjoint de l'opérateur de modélisation rai-Born (problème direct de modélisation) $\delta U_b^{obs} = U_b^{obs} - U^{ref}$ est le champ diffracté linéarisé enregistré au capteur r suivant la direction b. Au premier ordre, il représente les ondes montantes observées.

Q est une pondération à définir, fonction du point $x_0$ considéré, pour que l'image quantifiée reconstruite soit aussi proche possible des perturbations du milieu (ce qui est ici recherché).

Dans la suite, nous décrivons une manière de déterminer la formule d'imagerie d'un mode préféré de mise en œuvre de l'invention déjà décrit ci-dessus.

De manière générale, la pondération qui permet de reconstituer quantitativement les paramètres physiques du sous-sol, est définie à partir du Jacobien de Beylkin [Beylkin, 1984] qui permet de transformer une sommation discrète sur des positions sources 21 (et/ou capteurs 22, suivant les dispositifs d'acquisition 10) en intégration sur les pendages reconstruit du milieu. Ce Jacobien s'exprime en fonction de paramètres de fonctions de Green calculables par tracé de rais 2D ou 3D.

Le calcul de la pondération passe par plusieurs hypothèses : l'approximation locale, la dimension de l'espace (2D, 3D), l'échantillonnage spatial des sources 21 et capteurs 22, le type d'ondes converties ou pas. En pratique les dispositifs d'acquisition 20 ont une couverture limitée, l'image quantifiée du sous-sol s'apparente alors à un filtre des paramètres élastiques du sous-sol.

De plus, il n'est pas toujours possible de décorréler les trois paramètres caractérisant un milieu élastique isotrope (impédance P notée Ip, impédance S notée Is et densité notée $\rho$). C'est particulièrement vrai pour les dispositifs pour la détection des bouchons dans les pipelines. Autrement dit la couverture angulaire d'un même point est faible et un seul paramètre peut être estimé. On rappelle qu'on distingue les « ondes P », c'est-à-dire les ondes de pression ou ondes primaires, des « ondes S », c'est-à-dire les ondes de cisaillement ou ondes secondaires.

Dans la suite, on néglige tout d'abord la densité dont l'influence est négligeable jusqu'à 40° d'incidence dans la paramétrisation cho isie (impédance et densité). On peut faire ensuite l'hypothèse dite mono-paramètres des ondes P. Elle est basée sur la corrélation des réflectivités P et S du sous-sol. Cette hypothèse se traduit donc pour les ondes P par une perturbation relative en densité nulle et des perturbations relatives d'impédances P et S égales ($\delta I_P/I_P = \delta I_S/I_S$, $\delta\rho/\rho = 0$). Pour les ondes PS acquises avec des Ocean Bottom Cable (OBC) ou Ocean Bottom Sea (OBS), elle se traduira simplement par ($\delta\rho/\rho = 0$).

Dans la formulation du problème d'imagerie ci-avant, on peut remplacer l'opérateur rai-Born $(B_b)^*(s,x_0,r,\omega)$ et le champ diffracté linéarisé $\delta U_b^{obs}(s,r,\omega)$ par l'opérateur intégral de modélisation rai-Born qui s'exprime sous la forme :

$$[\text{math 4}] \delta U_b(s,r,\omega) = \int_{x \in V} B_{bk}(s,x,r,\omega) f_k(x) dx$$

Avec $f_k$ l'élément k du vecteur colonne des perturbations en ($\delta I_P/I_P$, $\delta I_S/I_S$, $\delta\rho/\rho$).

L'hypothèse mono-paramètre donne une expression générique de $B_{bk}$ de la forme

$$[\text{math 5}] B_{bk}(s,x,r,\omega) = freq(\omega) Ampl_{bk}(s,x,r) e^{i\omega T(s,x,r)}$$

Avec en 3D:

$$[\text{math 6}]Ampl_{bk}{}^{PP}(s,x,r) = A^{PP}(s,x,r)dir_s{}^{P}\left(pol_r{}^{P}\right)_b W_k{}^{PP}(s,x,r)$$

$$[\text{math 7}]Ampl_{bk}{}^{PS}(s,x,r) = dir_s{}^{P}[A^{PS}\left(pol_r{}^{S1}\right)_b W_k{}^{PS1} + A^{PS}\left(pol_r{}^{S2}\right)_b W_k{}^{PS2}](s,x,r)$$

$$[\text{math 8}]freq(\omega) = S(\omega)\omega^2$$

$dir_s{}^{P}$ est la directivité à la source $s$, $pol_r{}^{P}$ la polarisation P au capteur r, et $(pol_r{}^{S1})$ $W_k{}^{S1}$ + $(pol_r{}^{S2})$ $W_k{}^{S1}$ la polarisation S au capteur r.

On a donc

$$[\text{math 9}](B_b)^*(s,x_0,r,\omega) = freq(\omega)Ampl_b(s,x_0,r)e^{i\omega T(s,x_0,r)}$$

et

$$[\text{math 10}]\delta U_b^{obs}(s,r,\omega) = \int_{x\in V} freq(\omega)Ampl_b(s,x,r)e^{i\omega T(s,x,r)}f(x)dx$$

de sorte que la formulation du problème d'imagerie devient :

$$[\text{math 11}]I(x_0) = \sum_{\sigma(s),\sigma(r)}\sum_{\omega=-\omega_{max}}^{+\omega_{max}} freq(\omega)^2 Q(s,x_0,r,\omega)Ampl_b(s,x_0,r)e^{-i\omega T(s,x_0,r)}\int_{x\in V}Ampl_b(s,x,r)e^{i\omega T(s,x,r)}f(x)d\text{.}$$

L'hypothèse asymptotique hautes fréquences permet de faire une approximation locale au point à imager $x_0$ [Lambaré et al., 1992], on peut donc faire un développement de Taylor au premier ordre du temps de trajet total $T(s,x_0,r)$ autour du point considéré $x_0$, c'est-à-dire que

$$[\text{math 12}]T(s,x,r) = T(s,x_0,r) + (x - x_0).\nabla_{x_0}T(s,x_0,r)$$

et à l'ordre zéro

$$[\text{math 13}]Ampl_b(s,x,r) \approx Ampl_b(s,x_0,r).$$

En substituant ces deux expressions dans la formule d'imagerie on obtient :

$$[\text{math 14}]I(x_0) = \sum_{\sigma(s),\sigma(r)}\sum_{\omega=-\omega_{max}}^{+\omega_{max}} freq(\omega)^2 Ampl_b(s,x_0,r)^2 Q(s,x_0,r,\omega)e^{-i\omega x_0 \nabla_{x_0}T(s,x_0,r)}\int_{x\in V}e^{i\omega x\nabla_{x_0}T(s,x_0,r)}f(x)dx$$

Dans le terme intégral, on peut effectuer le changement de variable

$$[\text{math 15}]p = \omega x_0 \nabla_{x_0}T(s,x_0,r)$$

Ce vecteur est encore appelé nombre d'onde de diffraction. On retrouve alors la transformée de Fourier

$$[\text{math 16}]\hat{f}(p) = \int_{x\in V}e^{ix.p}f(x)dx$$

des perturbations du milieu, de sorte que la formule d'imagerie peut simplement s'exprimer :

[math

17]$I(x_0) =$

$\sum_{\sigma(s),\sigma(r)} \sum_{\omega=-\omega_{max}}^{+\omega_{max}} freq(\omega)^2 Ampl_b(s,x_0,r)^2 Q(s,x_0,r,\omega) e^{-i\omega x_0 \nabla_{x_0} T(s,x_0,r)} \hat{f}(p) = R(\hat{f})$

Il faut donc construire la pondération Q pour que l'opérateur R soit aussi proche que possible de la transformée de Fourier inverse. Notons qu'en passant en coordonnées polaires (2D) ou sphériques (3D), l'opérateur R s'apparente alors à une transformée de Radon généralisée inverse. Le point clef consiste à passer de sommations discrètes finies, à des intégrales continues pour faire apparaître la transformée de Radon généralisée inverse.

Pour l'intégration continue des fréquences, on peut supposer que l'échantillonnage des fréquences est régulier dans l'intervalle [$-\omega_{max}$ ; $+\omega_{max}$] avec un pas constant $\Delta\omega$. Le passage d'une somme finie discrète à une intégrale continue ne pose pas de problème. De plus l'intégration sur les fréquences négatives disparaît en introduisant le coefficient 2, on obtient :

[math

18]$I(x_0) = 2\sum_{\sigma(s),\sigma(r)} \int_{\omega=0}^{\omega_{max}} d\omega \frac{freq(\omega)^2}{\Delta\omega} Ampl_b(s,x_0,r)^2 Q(s,x_0,r,\omega) e^{-i\omega x_0 \nabla_{x_0} T(s,x_0,r)} \hat{f}(p)$

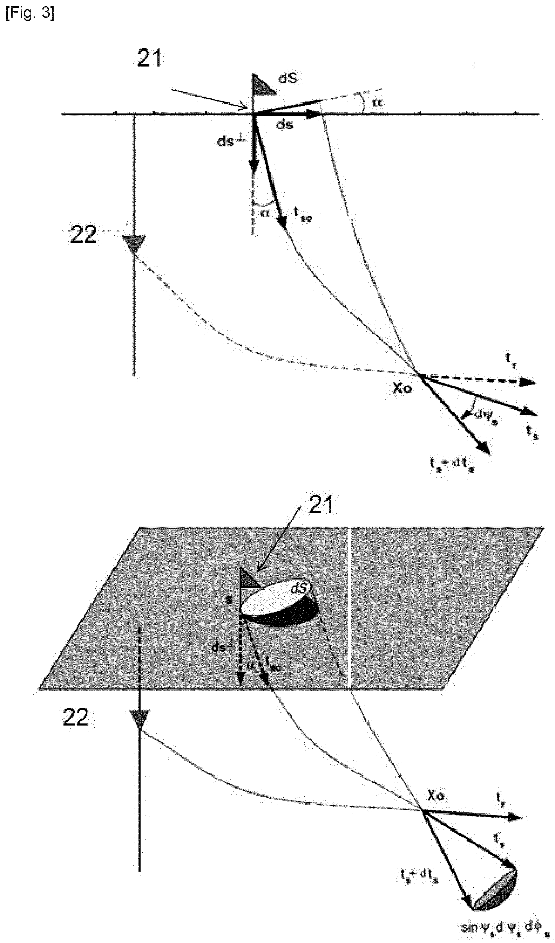

A ce stade aucune hypothèse n'a été faite concernant le type d'acquisition sismique. Pour construire la pondération Q, il faut passer d'un échantillonnage spatial (en sources ou capteurs) à des variations angulaires du vecteur normal pendage, ou plus simplement à une investigation des pendages du milieu pour chaque point de la zone d'intérêt. L'intégration continue des variables associées au dispositif d'acquisition permet de construire la pondération Q pour retrouver l'expression de la transformée de Radon généralisée inverse. Par ce biais, on peut voir l'importance de la couverture angulaire du dispositif d'acquisition 20 pour reconstruire le milieu géologique [Miller et al, 1987]. La **figure 3** illustre les angles en 2D (haut) et en 3D (bas) des rayons des ondes acoustiques au point image x0 dans le cas d'un dispositif composé d'une source 21 et d'un capteur 22. Cette figure illustre aussi comment une triangulation faite à partir de positions sources peut donner une solution pour calculer une surface élémentaire Es qui sera reprise dans la construction de la pondération. Selon une mise en œuvre de l'invention, cette surface élémentaire peut se baser sur une triangulation construite à partir des positions réelles des sources 21. Ce serait le même principe pour un dispositif surfacique avec des positions de capteurs 22. Cela dépend du type de collection d'enregistrements (organisés selon une source 21 commune ou selon un capteur 22 commun). Par la suite, on appelle collection à/en source commune un ensemble d'enregistrements réalisés pour différents couples (source 21, capteur 22), la source 21 étant identique pour tous ces couples 22. On appelle collection à/en capteur commun un ensemble d'enregistrements réalisés pour différents couples (source 21, capteur 22), le capteur étant identique pour tous ces couples 22.

Si la variable d'intégration concerne les sources 21 (enregistrements organisés selon un capteur 22 commun), l'intégration continue est préparée en attribuant un incrément d'intégration $\Delta s$ et en utilisant une surface élémentaire $E_s$, et l'expression ci-avant devient :

[math

19]$I(x_0) = 2\int_{E_s} ds \int_{\omega=0}^{\omega_{max}} d\omega \frac{freq(\omega)^2}{\Delta s \Delta\omega} Ampl_b(s,x_0,r)^2 Q(s,x_0,r,\omega) e^{-i\omega x_0 \nabla_{x_0} T(s,x_0,r)} \hat{f}(p)$

A noter que si la variable d'intégration concerne les capteurs 22 (enregistrements organisés selon une source commune), on remplace dans l'expression ci-dessus $E_s$ par $E_r$, $\Delta s$ par $\Delta r$ et $ds$ par $dr$.

En 2D, un seul angle sert à décrire un vecteur par rapport à l'axe vertical. La pondération Q est construite pour que l'opérateur R soit aussi proche possible de la transformé de Fourier inverse 2D ou encore une transformée de Radon inverse dans l'espace Euclidien $R^2$. Pour cela un changement de variable en coordonnées polaires $(s,|w|) \rightarrow (|p|,\Psi_s)$ suffit, d'où

[math 20]$Q(s,x_0,r,\omega) = \frac{2}{(2\pi)^2 freq(\omega)^2} \frac{\Delta s \Delta\omega}{Ampl_b(s,x_0,r)^2} |\omega| |\nabla_{x_0} T(s,x_0,r)|^2 J_{s\rightarrow ts} J_{ts\rightarrow \Psi_s}$

$$[\text{math } 21]I(x_0) = \frac{4}{(2\pi)^2} \int_{E_s} ds \int_{\omega=0}^{\omega_{max}} d\omega |\omega| \left|\nabla_{x_0} T(s, x_0, r)\right|^2 e^{-i\omega x_0 \nabla_{x_0} T(s,x_0,r)} \hat{f}(p) \, \mathbb{J}_{s \to ts} \mathbb{J}_{ts \to \Psi_s}$$

$$[\text{math } 22]I(x_0) = \frac{4}{(2\pi)^2} \int_{E_{\Psi_s}} d\Psi_s \int_{|p|=0}^{p_{max}} |p| d|p| \hat{f}(p, \Psi_s) e^{-ix_0 \cdot p}$$

où J représente en effet des Jacobiens associés aux changements de variables [Nicoletis et al, 1997]. On détermine ainsi une formule d'imagerie en 2D (cas de sources et capteurs coplanaires) selon un mode préféré de mise en œuvre de l'invention.

On note que pour une collection à source commune (au lieu de capteur commun), il suffit de remplacer s par *r, ts* par *tr, Δs* par *Δr* et $\Psi_s$ par $\Psi_r$.

En 3D, deux angles (d'Euler) servent à décrire un vecteur par rapport à l'axe vertical. Cette fois la pondération *Q* est construite pour que l'opérateur *R* soit aussi proche possible de la transformée de Fourier inverse 3D ou encore une transformée de Radon inverse dans l'espace Euclidien $R^3$. Pour cela le changement de variable en coordonnées sphériques devient *(s,|w|) → (|p|,*$\Psi_s$*,*$\Phi_s$*)*, d'où

$$[\text{math } 23]Q(s, x_0, r, \omega) = \frac{2}{(2\pi)^3 freq(\omega)^2} \frac{\Delta s \Delta \omega}{Ampl_b(s,x_0,r)^2} |p|^2 \mathbb{J}_{\omega \to |p|} \mathbb{J}_{s \to ts} \mathbb{J}_{ts \to \Psi_s; \phi_s}$$

$$[\text{math } 24]Q(s, x_0, r, \omega) = \frac{2}{(2\pi)^3 freq(\omega)^2} \frac{\Delta s \Delta \omega}{Ampl_b(s,x_0,r)^2} |\omega|^2 \left|\nabla_{x_0} T(s, x_0, r)\right|^3 \mathbb{J}_{s \to ts} \mathbb{J}_{ts \to \Psi_s; \phi_s}$$

d'où

$$[\text{math } 25]I(x_0) = \frac{4}{(2\pi)^3} \int_{E_s} ds \int_{\omega=0}^{\omega_{max}} d\omega |\omega|^2 \left|\nabla_{x_0} T(s, x_0, r)\right|^3 e^{-i\omega x_0 \nabla_{x_0} T(s,x_0,r)} \hat{f}(p) \, \mathbb{J}_{s \to ts} \mathbb{J}_{ts \to \Psi_s; \phi_s}$$

$$[\text{math } 26]I(x_0) = \frac{4}{(2\pi)^3} \int_{E_{\Phi_s}} d\Phi_s \int_{E_{\Psi_s}} sin\Psi_s d\Psi_s \int_{|p|=0}^{p_{max}} |p|^2 d|p| \hat{f}(p, \Psi_s, \Phi_s) e^{-ix_0 \cdot p}$$

On détermine ainsi une formule d'imagerie en 3D (cas de sources 21 et capteurs 22 non coplanaires) selon un mode préféré de mise en œuvre de l'invention. A nouveau on note que pour une collection à source 21 commune (au lieu de capteur 22 commun), il suffit de remplacer s par *r, ts* par *tr, Δs* par *Δr,* $\Psi_s$ par $\Psi_r$ et $\Phi_s$ par $\Phi_r$.

*Modèles de perturbation relatives d'impédance*

A l'issue de l'étape (b), on dispose du profil estimé de perturbations relatives d'impédance, constituant un résultat de la surveillance du pipeline 1, pouvant le cas échéant être restitué de manière brute sur l'interface 13.

Avantageusement, le procédé comprend une étape (c) de post-traitement de ce profil de sorte à en tirer une information synthétique, telle qu'une extraction de certains paramètres caractéristiques de l'intérieur du pipeline (seuillage, moyennage, etc.) ou une représentation visuelle. Par exemple, comme l'on verra plus loin, on peut générer une image de ladite coupe transversale du pipeline 1 dans laquelle chaque point est coloré avec une couleur fonction de la valeur de la perturbation d'impédance en ce point.

Alternativement ou en complément, dans l'étape (c) ledit profil estimé de perturbations relatives d'impédance (i.e. le résultat de la migration quantitative) est préférentiellement comparé avec au moins un modèle de référence de perturbations relatives d'impédance représentatif de la présence d'un bouchon 3 dans le pipeline 1 à ladite position, voire avec une pluralité de modèles de référence de perturbations relatives d'impédance représentatifs d'un ensemble de configurations possibles de bouchon 3 dans le pipeline 1 à ladite position (en particulier trois configurations et donc trois modèles), de sorte à détecter un éventuel bouchon 3 à ladite position.

En effet, même affiché sous forme d'image, le profil estimé de perturbations relatives d'impédance est difficilement interprétable en soi.

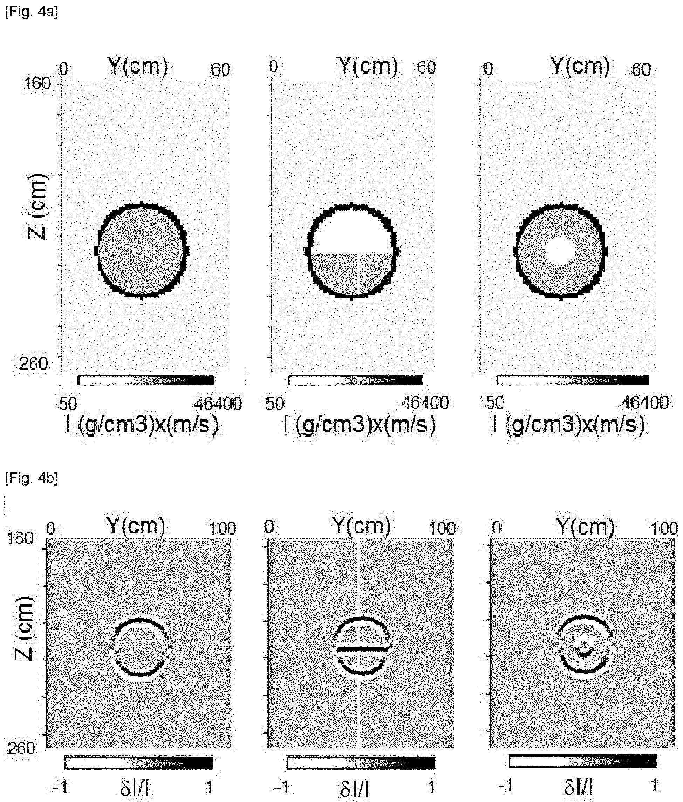

En revanche, il est possible de construire des modèles synthétiques réalistes pour la ou les configurations de bouchons. En particulier, en référence à la **figure 4a** (qui illustre un exemple de bouchons d'hydrates de gaz dans un pipeline de 30 cm de diamètre), on a trois configurations possibles de bouchon 3 dans le pipeline 1 dont au moins une configuration de bouchon total (gauche, il n'y a plus de lumière 2), une configuration de bouchon partiel en bas (milieu, la lumière 2 est seulement en haut), et une configuration de bouchon partiel en couronne (droite, la lumière est au centre). Dans la figure 4a, on a pris les valeurs suivantes d'impédance dans le modèle : faible valeur de 50 (g/cm3)x(m/s) (couleur blanche) pour l'impédance du gaz circulant dans la lumière 2, valeur intermédiaire 2700 (g/cm3)x(m/s) Pa.s/m (couleur grise) pour l'indépendance du bouchon 3, et forte valeur de 46400 (g/cm3)x(m/s) Pa.s/m (couleur noire) pour l'indépendance de la paroi du pipeline 1.

A partir de ces modèles, des perturbations relatives d'impédances peuvent être calculées en considérant séquentiellement les colonnes verticales du modèle, de sorte à obtenir les modèles dit de référence de perturbations relatives d'impédance. La **figure 4b** représente les modèles de perturbations relatives d'impédance correspondant aux modèles synthétiques de la figure 4a, sur une échelle avant de -1 à +1.

Le champ acoustique réfléchi idéal est calculé en considérant la contribution de chaque point diffractant du modèle constitué de perturbations relatives d'impédances. Cela permet de s'affranchir de toute considération du prétraitement nécessaire pour des données acquises sur le terrain.

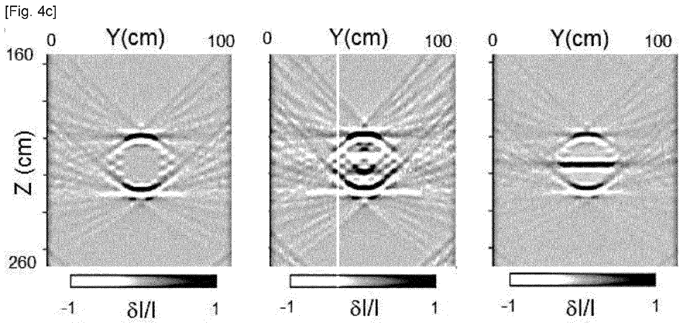

Ainsi, des résultats de migration quantitative correspondant aux trois configurations de bouchon susmentionnées sont représentées par la **figure 4c.** On note que lorsque le bouchon 3 est partiel on retrouve assez bien la discontinuité entre le bouchon 3 et la lumière 2 (au milieu un segment plat, et à droite la forme circulaire).

Pour faciliter la détection d'un bouchon total, à l'étape (c) ledit profil estimé de perturbations relatives d'impédance est en outre avantageusement comparé avec un modèle de référence de perturbations relatives d'impédance représentatif d'une absence de bouchon 3 dans le pipeline 1 à ladite position.

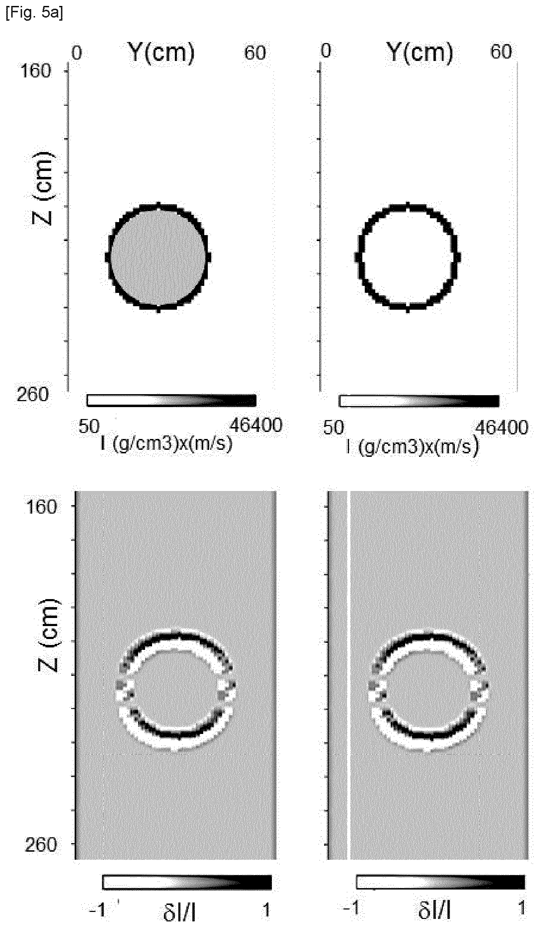

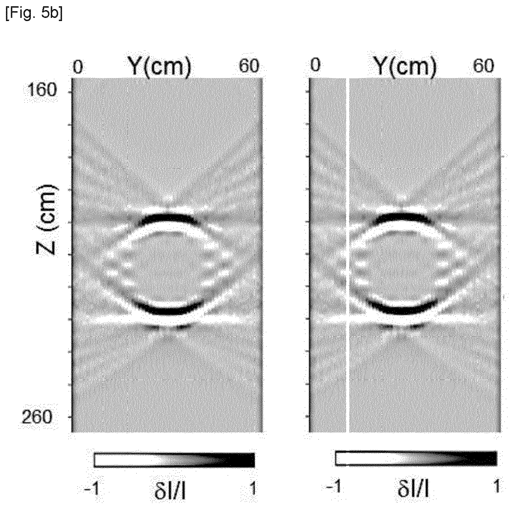

En effet, si en référence aux **figures 5a et 5b** l'on construit deux modèles synthétiques avec un pipeline contenant un bouchon d'hydrate total (figure 5a en haut à gauche) et uniquement du gaz, i.e. une absence de bouchon (figure 5a en haut à droite), et si l'on compare leurs modèles correspondant de référence de perturbations relatives d'impédances (figure 5a en bas) le contraste au toit du pipeline 1 est similaire mais quand même plus fort (d'environ 11%) dans le cas d'une absence de bouchon. On retrouve cette tendance en comparant les résultats de la migration quantitative (figure 5b), où on observe une différence d'environ 12% (avec une incertitude de 1%).

On note que la comparaison peut être faite de nombreuses façons différentes. Par exemple, pour un profil donné de perturbations relatives d'impédances, on pourra choisir parmi les différents modèles de référence (présence d'un bouchon total, présente d'un bouchon partiel en bas, présence d'un bouchon partiel en couronne, absence de bouchon), celui le plus proche par une fonction de distance.

*Localisation et destruction de bouchon*

A l'issue de l'étape (c), selon le résultat de la comparaison on peut conclure à la présence ou l'absence d'un bouchon 3 dans le pipeline 1, et le cas échéant disposer d'informations descriptives dudit bouchon 3 (forme, caractère total ou non, taille, etc.).

Avantageusement, le procédé comprend la répétition des étapes (a) et (b), voire (c), pour une pluralité de positions le long du pipeline 1, grâce au caractère mobile du dispositif d'acquisition acoustique 20. En particulier, on peut réaliser la comparaison de l'étape (c) profil par profil, ou bien groupe de profils par groupe de profils.

De manière particulièrement préférée on réalise également dans l'étape (c) (en particulier si elle est commune à un groupe de profils) une comparaison des profils estimés pour deux positions successives, ce qui permet de mettre en évidence, en cas de différence significative de perturbations relatives d'impédance, un début et/ou une fin de bouchon 3, ce qui renforce la certitude de détection et permet de définir une localisation du bouchon 3.

Dans tous les cas, si un bouchon 3 a été détecté, il est possible d'agir. Le procédé comprend ainsi préférentiellement, si un bouchon 3 a été détecté dans le pipeline 1 une étape (d) de destruction du bouchon 3 détecté, notamment par chauffage ou toute autre technique connue de l'homme du métier.

*Equipement et produit programme d'ordinateur*

Selon un deuxième aspect, est proposé l'équipement 10 pour la mise en œuvre du présent procédé de surveillance de l'intérieur d'un pipeline 1 selon l'une quelconque des variantes ou des combinaisons de variantes décrites précédemment.

Cet équipement 10 comprend comme expliqué des moyens de traitement de données 11, et avantageusement des moyens de stockage de données 12, et une interface 13.

Les moyens de traitement de données 11 sont configurés pour implémenter :

- Pour une position le long dudit pipeline 1, obtenir des données acoustiques descriptives d'une coupe transversale dudit pipeline 1 à ladite position, acquises par un dispositif d'acquisition acoustique 20 mobile dans ladite masse d'eau E ;

- Estimer par migration quantitative à partir desdites données acoustiques un profil estimé de perturbations relatives d'impédance selon ladite coupe transversale dudit pipeline 1 ;
- Avantageusement comparer ledit profil estimé de perturbations relatives d'impédance avec au moins un modèle de référence de perturbations relatives d'impédance représentatif de la présence d'un bouchon 3 dans le pipeline 1 à ladite position.

De manière préférée, l'invention concerne également l'ensemble de l'équipement 10 et du dispositif d'acquisition acoustique 20. Par exemple l'équipement 10 pourra être localisé sur un bateau équipé du dispositif d'acquisition acoustique 20, pour un fonctionnement en temps réel.

Selon un troisième aspect, l'invention concerne également un produit programme d'ordinateur téléchargeable depuis un réseau de communication et/ou enregistré sur un support lisible par ordinateur et/ou exécutable par un processeur, comprenant des instructions de code de programme pour la mise en œuvre du procédé selon le premier aspect, lorsque ledit programme est exécuté sur un ordinateur.

## Revendications

1. Procédé de surveillance de l'intérieur d'un pipeline (1) disposé au contact d'un sol (S) sous une masse d'eau (E) en vue de détecter un bouchon (3) dans ledit pipeline (1), **caractérisé en ce que** le procédé comprend la mise en œuvre par des moyens de traitement de données (11) d'étapes de :

   (a) Pour au moins une position le long dudit pipeline (1), obtention de données acoustiques descriptives d'au moins une coupe transversale dudit pipeline (1) à ladite position, acquises au moyen d'un dispositif d'acquisition acoustique (20) mobile dans ladite masse d'eau (E), ledit dispositif d'acquisition acoustique (20) mobile dans ladite masse d'eau (E) étant embarqué sur un bateau ou un véhicule sous-marin téléguidé ;
   (b) Estimation par migration quantitative avec préservation d'amplitude à partir desdites données acoustiques d'un profil estimé de perturbations relatives d'impédance selon au moins ladite coupe transversale dudit pipeline (1) ;
   (c) comparaison dudit profil estimé de perturbations relatives d'impédance avec au moins un modèle de référence de perturbations relatives d'impédance représentatif de la présence dudit bouchon (3) dans ledit pipeline (1) à ladite position.

2. Procédé selon la revendication 1, dans lequel ledit dispositif d'acquisition acoustique (20) comprend au moins une source (21) d'ondes acoustiques et au moins un capteur (22) d'ondes acoustiques, lesdites données acoustiques descriptives d'une coupe transversale dudit pipeline (1) à ladite position étant un champ acoustique réfléchi reçu par l'au moins un capteur (22) suite à la génération d'un champ acoustique par l'au moins une source (21).

3. Procédé selon la revendication 2, dans lequel ledit dispositif d'acquisition acoustique (20) comprend une pluralité de capteurs (22) et/ou de sources (21) disposés selon une direction sensiblement orthogonale à une direction longitudinale dudit pipeline (1) à ladite position.

4. Procédé selon l'une des revendications 2 ou 3, dans lequel l'étape (b) comprend le calcul aux positions de chaque source (21) et de chaque capteur (22) de fonctions dites de Green représentatives d'une réponse à une émission acoustique ponctuelle en tout point de ladite coupe transversale, puis l'estimation en tout point de ladite coupe transversale dudit pipeline (1) d'une valeur de perturbation relative d'impédance en fonction dudit champ acoustique reçu et de paramètres desdites fonctions de Green calculées.

5. Procédé selon la revendication 4, dans lequel le calcul aux positions de chaque source (21) et de chaque capteur (22) desdites fonctions de Green comprend l'interpolation en fonction des positions réelles desdites sources (21) et desdits capteurs (22) de fonctions de Green précalculées pour un ensemble de positions fictives.

6. Procédé selon l'une des revendications 2 à 5, dans lequel ladite estimation par migration quantitative est obtenue en un point $x_0$ de la coupe transversale du pipeline (1), pour une collection de source(s) (21) et capteur(s) (22) s'ils sont coplanaires, grâce à la formule $I(x_0) = \frac{4}{(2\pi)^2} \int_{E_{\Psi_s}} d\Psi_s \int_{|p|=0}^{p_{max}} |p|d|p|\hat{f}(p, \Psi_s)e^{-ix_0 \cdot p}$, et sinon grâce à la formule $I(x_0) = \frac{4}{(2\pi)^3} \int_{E_{\Phi_s}} d\Phi_s \int_{E_{\Psi_s}} sin\Psi_s d\Psi_s \int_{|p|=0}^{p_{max}} |p|^2 d|p|\hat{f}(p, \Psi_s, \Phi_s)e^{-ix_0 \cdot p}$, avec $\Psi_s$ et $\Phi_s$

traduisant la couverture angulaire du dispositif d'acquisition sismique (20), *p* le nombre d'onde de diffraction, et $\hat{r}$ la transformée de Fourier des perturbations du milieu.

7. Procédé selon l'une des revendications précédentes, dans lequel à l'étape (c) ledit profil estimé de perturbations relatives d'impédance est comparé avec une pluralité de modèles de référence de perturbations relatives d'impédance représentatifs d'un ensemble de configurations possibles de bouchon (3) dans le pipeline (1) à ladite position.

8. Procédé selon la revendication 7, dans lequel ledit ensemble de configurations possibles de bouchon (3) dans le pipeline (1) à ladite position comprend au moins une configuration de bouchon total, une configuration de bouchon partiel en bas, et une configuration de bouchon partiel en couronne.

9. Procédé selon l'une des revendications précédentes, dans lequel à l'étape (c) ledit profil estimé de perturbations relatives d'impédance est en outre comparé avec un modèle de référence de perturbations relatives d'impédance représentatif d'une absence de bouchon (3) dans le pipeline (1) à ladite position.

10. Procédé selon l'une des revendications précédentes, comprenant en outre une étape (d) de destruction du bouchon (3) détecté.

11. Procédé selon l'une des revendication 1 à 10, dans lequel ledit pipeline (1) est un pipeline d'hydrocarbures, ledit bouchon (3) étant un bouchon d'hydrates.

12. Equipement (10) pour la mise en œuvre du procédé de surveillance de l'intérieur d'un pipeline (1) disposé au contact d'un sol (S) sous une masse d'eau (E) selon l'une quelconque des revendications précédentes, l'équipement comprenant :

   - un dispositif d'acquisition acoustique comprenant une pluralité de capteurs et/ou de sources disposés selon une direction sensiblement orthogonale à une direction longitudinale dudit pipeline ;
   - des moyens de traitement de données (11) configurés pour :

      o Pour au moins une position le long dudit pipeline (1), obtenir des données acoustiques descriptives d'au moins une coupe transversale dudit pipeline (1) à ladite position, acquises par ledit dispositif d'acquisition acoustique (20) mobile dans ladite masse d'eau (E) ;
      o Estimer par migration quantitative à partir desdites données acoustiques un profil estimé de perturbations relatives d'impédance selon au moins ladite coupe transversale dudit pipeline (1).

13. Produit programme d'ordinateur téléchargeable depuis un réseau de communication et/ou enregistré sur un support lisible par ordinateur et/ou exécutable par un processeur, qui conduit l'équipement selon la revendication 12 à exécuter des instructions de code de programme pour la mise en œuvre du procédé selon l'une des revendications 1 à 11, lorsque ledit programme est exécuté sur un ordinateur.


**Patentansprüche**

1. Verfahren zur Überwachung des Inneren einer Rohrleitung (1), die in Kontakt mit einem Boden (S) unter einer Wassermasse (E) angeordnet ist, zwecks Detektion eines Pfropfens (3) in der Rohrleitung (1), **dadurch gekennzeichnet, dass** das Verfahren die Umsetzung, durch Datenverarbeitungsmittel (11), folgender Schritte beinhaltet:

   (a) für mindestens eine Position entlang der Rohrleitung (1), Erhalten von akustischen Daten, die mindestens einen Querschnitt der Rohrleitung (1) an der Position beschreiben und mit Hilfe einer in der Wassermasse (E) beweglichen akustischen Erfassungsvorrichtung (20) erfasst werden, wobei sich die in der Wassermasse (E) bewegliche akustische Erfassungsvorrichtung (20) an Bord eines Schiffs oder eines ferngesteuerten Unterwasserfahrzeugs befindet;
   (b) Schätzen, durch amplitudenbewahrende quantitative Migration und anhand der akustischen Daten, eines geschätzten Profils relativer Impedanzstörungen gemäß mindestens dem Querschnitt der Rohrleitung (1);
   (c) Vergleichen des geschätzten Profils relativer Impedanzstörungen mit mindestens einem Referenzmodell relativer Impedanzstörungen, das für das Vorhandensein des Pfropfens (3) in der Rohrleitung (1) an der Position repräsentativ ist.

2. Verfahren nach Anspruch 1, wobei die akustische Erfassungsvorrichtung (20) mindestens eine Quelle (21) akustischer Wellen und mindestens einen Sensor (22) für akustische Wellen beinhaltet, wobei die akustischen Daten, die einen Querschnitt der Rohrleitung (1) an der Position beschreiben, ein reflektiertes akustisches Feld sind, das von dem mindestens einen Sensor (22) im Anschluss an die Erzeugung eines akustischen Felds durch die mindestens eine Quelle (21) empfangen wird.

3. Verfahren nach Anspruch 2, wobei die akustische Erfassungsvorrichtung (20) eine Vielzahl von Sensoren (22) und/oder Quellen (21) beinhaltet, die in einer zu einer Längsrichtung der Rohrleitung (1) an der Position im Wesentlichen orthogonalen Richtung angeordnet sind.

4. Verfahren nach einem der Ansprüche 2 oder 3, wobei Schritt (b) das Berechnen, an den Positionen jeder Quelle (21) und jedes Sensors (22), sogenannter Greenscher Funktionen, die für eine Antwort auf eine punktuelle akustische Emission an jedem Punkt des Querschnitts repräsentativ sind, und dann das Schätzen, an jedem Punkt des Querschnitts der Rohrleitung (1), eines Werts einer relativen Impedanzstörung in Abhängigkeit von dem empfangenen akustischen Feld und von Parametern der berechneten Greenschen Funktionen beinhaltet.

5. Verfahren nach Anspruch 4, wobei das Berechnen der Greenschen Funktionen an den Positionen jeder Quelle (21) und jedes Sensors (22) das Interpolieren von für einen Satz fiktiver Positionen vorberechneten Greenschen Funktionen in Abhängigkeit von den tatsächlichen Positionen der Quellen (21) und der Sensoren (22) beinhaltet.

6. Verfahren nach einem der Ansprüche 2 bis 5, wobei die Schätzung, durch quantitative Migration, an einem Punkt $x_0$ des Querschnitts der Rohrleitung (1) für eine Sammlung einer oder mehrerer Quellen (21) und eines oder mehrerer Sensoren (22) mit Hilfe der Formel $I(x_0) = \frac{4}{(2\pi)^2} \int_{E_{\Psi_S}} d\Psi_S \int_{|p|=0}^{p_{max}} |p| d|p| \hat{f}(p, \Psi_S) e^{-ix_0 \cdot p}$ erhalten wird, wenn diese komplanar sind, und andernfalls mit Hilfe der Formel $I(x_0) = \frac{4}{(2\pi)^3} \int_{E_{\Phi_S}} d\Phi_S \int_{E_{\Psi_S}} sin\Psi_S d\Psi_S \int_{|p|=0}^{p_{max}} |p|^2 d|p| \hat{f}(p, \Psi_S, \Phi_S) e^{-ix_0 \cdot p}$, wobei $\Psi_s$ und $\Phi_s$ die Winkelabdeckung der seismischen Erfassungsvorrichtung (20) berücksichtigen, p die Diffraktionswellenzahl ist und $\hat{f}$ die FourierTransformation der Störungen der Umgebung ist.

7. Verfahren nach einem der vorhergehenden Ansprüche, wobei in Schritt (c) das geschätzte Profil relativer Impedanzstörungen mit einer Vielzahl von Referenzmodellen relativer Impedanzstörungen, die für einen Satz möglicher Konfigurationen eines Pfropfens (3) in der Rohrleitung (1) an der Position repräsentativ sind, verglichen wird.

8. Verfahren nach Anspruch 7, wobei der Satz möglicher Konfigurationen eines Pfropfens (3) in der Rohrleitung (1) an der Position mindestens eine Konfiguration mit einem vollumfänglichen Pfropfen, eine Konfiguration mit einem partiellen Pfropfen im unteren Bereich und eine Konfiguration mit einem partiellen Pfropfen im oberen Bereich beinhaltet.

9. Verfahren nach einem der vorhergehenden Ansprüche, wobei in Schritt (c) das geschätzte Profil relativer Impedanzstörungen ferner mit einem Referenzmodell relativer Impedanzstörungen, das für das Nichtvorhandensein eines Pfropfens (3) in der Rohrleitung (1) an der Position repräsentativ ist, verglichen wird.

10. Verfahren nach einem der vorhergehenden Ansprüche, ferner beinhaltend einen Schritt (d) des Zerstörens des detektierten Pfropfens (3).

11. Verfahren nach einem der Ansprüche 1 bis 10, wobei die Rohrleitung (1) eine Rohrleitung für Kohlenwasserstoffe ist, wobei der Pfropfen (3) ein Hydratpfropfen ist.

12. Ausrüstung (10) für die Umsetzung des Verfahrens zur Überwachung des Inneren einer Rohrleitung (1), die in Kontakt mit einem Boden (S) unter einer Wassermasse (E) angeordnet ist, nach einem der vorhergehenden Ansprüche, wobei die Ausrüstung Folgendes beinhaltet:

- eine akustische Erfassungsvorrichtung, die eine Vielzahl von Sensoren und/oder Quellen beinhaltet, die in einer zu einer Längsrichtung der Rohrleitung im Wesentlichen orthogonalen Richtung angeordnet sind;
- Datenverarbeitungsmittel (11), die zu Folgendem konfiguriert sind:

o für mindestens eine Position entlang der Rohrleitung (1), Erhalten von akustischen Daten, die mindestens einen Querschnitt der Rohrleitung (1) an der Position beschreiben und durch die in der Wassermasse (E) bewegliche akustische Erfassungsvorrichtung (20) erfasst werden;

o Schätzen, durch quantitative Migration und anhand der akustischen Daten, eines geschätzten Profils relativer Impedanzstörungen gemäß mindestens dem Querschnitt der Rohrleitung (1).

13. Computerprogrammprodukt, das aus einem Kommunikationsnetzwerk heruntergeladen werden kann und/oder auf einem computerlesbaren Medium gespeichert ist und/oder von einem Prozessor ausführbar ist, das bewirkt, dass die Ausrüstung nach Anspruch 12 bei Ausführung des Programms auf einem Computer Programmcodeanweisungen zur Umsetzung des Verfahrens nach einem der Ansprüche 1 bis 11 ausführt.

**Claims**

1. Method for monitoring the interior of a pipeline (1) arranged in contact with a ground (S) beneath a body of water (E) for the purpose of detecting a blockage (3) in said pipeline (1), **characterized in that** the method comprises implementing, by way of data processing means (11), steps of:

   (a) for at least one position along said pipeline (1), obtaining acoustic data describing at least one cross section of said pipeline (1) at said position, said data being acquired by means of an acoustic acquisition device (20) which is movable in said body of water (E), said acoustic acquisition device (20) which is movable in said body of water (E) being carried on board a boat or a remotely operated underwater vehicle;
   (b) estimating, by quantitative migration with amplitude preservation from said acoustic data, an estimated profile of relative impedance disturbances along at least said cross section of said pipeline (1);
   (c) comparing said estimated profile of relative impedance disturbances with at least one relative impedance disturbance reference model representative of the presence of said blockage (3) in said pipeline (1) at said position.

2. Method according to Claim 1, wherein said acoustic acquisition device (20) comprises at least one acoustic wave source (21) and at least one acoustic wave sensor (22), said acoustic data describing a cross section of said pipeline (1) at said position being a reflected acoustic field received by the at least one sensor (22) following the generation of an acoustic field by the at least one source (21).

3. Method according to Claim 2, wherein said acoustic acquisition device (20) comprises a plurality of sensors (22) and/or sources (21) arranged in a direction substantially orthogonal to a longitudinal direction of said pipeline (1) at said position.

4. Method according to either of Claims 2 and 3, wherein step (b) comprises calculating, at the positions of each source (21) and each sensor (22), so-called Green functions representative of a response to a one-time acoustic emission at any point of said cross section, then estimating, at any point of said cross section of said pipeline (1), a relative impedance disturbance value as a function of said received acoustic field and of parameters of said calculated Green functions.

5. Method according to Claim 4, wherein the calculation, at the positions of each source (21) and each sensor (22), of said Green functions comprises interpolating, as a function of the actual positions of said sources (21) and of said sensors (22), Green functions precalculated for a set of fictitious positions.

6. Method according to one of Claims 2 to 5, wherein said estimation by quantitative migration is obtained at a point $x_0$ of the cross section of the pipeline (1), for a collection of source(s) (21) and sensor(s) (22) if they are coplanar, by means of the formula $I(x_0) = \frac{4}{(2\pi)^2} \int_{E_{\Psi_s}} d\Psi_s \int_{|p|=0}^{p_{max}} |p| d|p| \hat{f}(p, \Psi_s) e^{-ix_0 \cdot p}$ , and otherwise by means of the formula $I(x_0) = \frac{4}{(2\pi)^3} \int_{E_{\Phi_s}} d\Phi_s \int_{E_{\Psi_s}} \sin\Psi_s d\Psi_s \int_{|p|=0}^{p_{max}} |p|^2 d|p| \hat{f}(p, \Psi_s, \Phi_s) e^{-ix_0 \cdot p}$ , where $\Psi_s$ and $\Phi_s$ represent the angular coverage of the seismic acquisition device (20), p represents the diffraction wave number, and $\hat{f}$ represents the Fourier transform of the disturbances in the medium.

7. Method according to one of the preceding claims, wherein, in step (c), said estimated profile of relative impedance disturbances is compared with a plurality of relative impedance disturbance reference models representative of a set of possible blockage (3) configurations in the pipeline (1) at said position.

8. Method according to Claim 7, wherein said set of possible blockage (3) configurations in the pipeline (1) at said position comprises at least a complete blockage configuration, a partial blockage configuration at the bottom, and a partial blockage configuration at the top.

9. Method according to one of the preceding claims, wherein, in step (c), said estimated profile of relative impedance disturbances is further compared with a relative impedance disturbance reference model representative of an absence of a blockage (3) in the pipeline (1) at said position.

10. Method according to one of the preceding claims, further comprising a step (d) of removing the detected blockage (3).

11. Method according to one of Claims 1 to 10, wherein said pipeline (1) is a hydrocarbon pipeline, said blockage (3) being a hydrate blockage.

12. Equipment (10) for implementing the method for monitoring the interior of a pipeline (1) arranged in contact with a ground (S) beneath a body of water (E) according to any one of the preceding claims, the equipment comprising:

   - an acoustic acquisition device comprising a plurality of sensors and/or sources arranged in a direction substantially orthogonal to a longitudinal direction of said pipeline;
   - data processing means (11) configured to:

      o for at least one position along said pipeline (1), obtain acoustic data describing at least one cross section of said pipeline (1) at said position, said data being acquired by said acoustic acquisition device (20) which is movable in said body of water (E);
      o estimate, by quantitative migration from said acoustic data, an estimated profile of relative impedance disturbances along at least said cross section of said pipeline (1).

13. Computer program product downloadable from a communication network and/or recorded on a medium that is readable by computer and/or executable by a processor, which computer program product leads the equipment according to Claim 12 to execute program code instructions for implementing the method according to one of Claims 1 to 11, when said program is executed on a computer.

[Fig. 1]

[Fig. 2]

(a) Obtention de données acoustiques

(b) Migration quantitative

(c) Comparaison avec un modèle de perturbations relatives d'impédance

(d) Destruction du bouchon

[Fig. 3]

[Fig. 4a]

[Fig. 4b]

[Fig. 4c]

[Fig. 5a]

[Fig. 5b]

## RÉFÉRENCES CITÉES DANS LA DESCRIPTION

**Documents brevets cités dans la description**

- FR 3001162
- WO 2014114887 A
- WO 2013169984 A
- WO 2011133046 A

- US 2008163700 A1
- US 2013298937 A1
- US 2018100950 A1
- US 4422166 A

**Littérature non-brevet citée dans la description**

- **BEYLKIN, G.** The inversion problem and applications of the generalized Radon transform. *Comm. Pure Appl. Math.*, 1984, vol. 37, 579-599
- **CHAPUIS, B.** ; **BARONIAN, V.** ; **JENSON, F.** ; **POMIÉ, L.** 2014, Hydrate plug localization and characterization using guided waves. *11th European Conference on Non-Destructive Testing (ECNDT 2014)*, 2014
- **GEREA, C.** ; **NICOLETIS, L.** ; **GRANGER, P.Y.** *Multicomponent true amplitude anisotropic imaging",proceedings of the 9th IWSA workshop, SEG*, 2000
- **KIPPERSUND, R. A.** ; **LUNDE, P.** ; **FROYSA, K. E.** Hydrate Deposit Detection in Pipes Using Ultrasonic Guided Waves. *Proceedings of the 34th Scandinavian Symposium on Physical Acoustics*, 2011
- **LAMBARÉ, G.** ; **VIRIEUX, J.** ; **MADARIAGA, R.** ; **SIDE, J.** Iterative asymptotic inversion in the acoustic approximation. *Geophysics*, 1992, vol. 57, 1138-1154
- **MILLER, D.** ; **ORISTAGLIO, M.** ; **BEYLKIN, G.** A new slant on seismic imaging: Migration and integral geometry. *Geophysics*, 1987, vol. 52, 943-964

- **NICOLETIS, L.** ; **SVAY-LUCAS, J.** ; **CLOCHARD, V.** ; **COMPTE, P.** 3D true amplitude migration of 3-C compressional and converted shear wave. *J. of Seismic Explo.*, 1997, vol. 6, 127-142
- **POMIÉ, L.** ; **TZOTZI, C.** ; **FADERNE, C.** ; **CHAPUIS, B.** ; **JENSON, F.** Hydrate Plug Localization and Characterization With Ultrasonic and Guided Waves Technologies. *9th North American Conference on Multiphase Technology*, 2014
- **WANG, X.** ; **LEWIS, K.M.** ; **PAPADOPOULOU, K.A.** ; **LENNOX, B.** ; **TURNER, J.T.** Detection of hydrate and other blockages in gas pipelines using acoustic reflectometry. *Journal of Mechanical Engineering Science*, 2011, vol. 226 (7), 1800-1810
- **S. WÖCKEL** ; **U. HEMPEL** ; **J. AUGE**. Acousto-capacitive tomography of liquid multiphase systems. *SENSORS AND ACTUATORS A: PHYSICAL*, 23 July 2011, vol. 172 (1), 322-329, https://doi.org/10.1016/j.proeng.2010.09.099
- **A. SIMI** ; **S. BRACCIALI** ; **G. MANACORDA**. Hough transform based automatic pipe detection for array GPR: Algorithm development and on-site tests. *2008 IEEE Radar Conference*, 2008